(19) Europäisches Patentamt / European Patent Office / Office européen des brevets

(11) **EP 2 699 904 B1**

(12) **EUROPEAN PATENT SPECIFICATION**

(45) Date of publication and mention
of the grant of the patent:
**21.06.2017  Bulletin 2017/25**

(21) Application number: **11864116.6**

(22) Date of filing: **09.08.2011**

(51) Int Cl.:
**G01N 21/64** (2006.01)     **A61B 5/00** (2006.01)

(86) International application number:
**PCT/KR2011/005785**

(87) International publication number:
**WO 2012/144695 (26.10.2012 Gazette 2012/43)**

(54) **PROSTATE CANCER DIAGNOSIS DEVICE USING FRACTAL DIMENSION VALUE, AND CORRESPONDING METHOD**

VORRICHTUNG FÜR DIE PROSTATAKREBSDIAGNOSE BASIEREND AUF FRAKTALEM DIMENSIONSWERT, SOWIE ENTSPRECHENDE METHODE

DISPOSITIF DE DIAGNOSTIC DU CANCER DE LA PROSTATE UTILISANT UNE VALEUR DE DIMENSION FRACTALE, ET PROCÉDÉ CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2011  KR 20110036610**
**20.04.2011  KR 20110036611**
**02.06.2011  KR 20110053505**
**02.06.2011  KR 20110053507**

(43) Date of publication of application:
**26.02.2014  Bulletin 2014/09**

(73) Proprietors:
• **IM Co., Ltd.**
  **Gyeonggi-do 445-170 (KR)**
• **Fraunhofer Gesellschaft zur Förderung der angewandten Forschung E.V.**
  **80686 München (DE)**

(72) Inventors:
• **LEE, Sang Dae**
  **Suwon-si**
  **Gyeonggi-do 443-373 (KR)**
• **KIM, Kyung Sik**
  **Anyang-si**
  **Gyeonggi-do 431-085 (KR)**
• **BAIK, Jun Heum**
  **Wonju-si**
  **Gangwon-do 220-130 (KR)**
• **KIM, Eunjung**
  **Yongin-si, Gyeonggi-do 446-807, (KR)**

• **HAN, Tae-Young**
  **01109 Dresden (DE)**
• **GERICH, Carola**
  **01109 Dresden (DE)**
• **ZEH, Christoph**
  **01109 Dresden (DE)**
• **HAERTLING, Thomas**
  **01109 Dresden (DE)**
• **OPITZ, Joerg**
  **01109 Dresden (DE)**
• **SCHREIBER, Juergen**
  **01109 Dresden (DE)**

(74) Representative: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) References cited:
**EP-A1- 2 251 675**     **JP-A- 2008 202 978**
**KR-A- 20100 021 804**     **KR-A- 20100 085 320**
**KR-B1- 100 933 569**     **US-A- 5 467 767**
**US-A1- 2004 073 119**     **US-A1- 2010 292 543**

• **GERICH C E ET AL: "Detection of cancer cells in prostate tissue with time-resolved fluorescence spectroscopy", OPTICAL INTERACTIONS WITH TISSUE AND CELLS XXII, SPIE, 1000 20TH ST. BELLINGHAM WA 98225-6705 USA, vol. 7897, no. 1, 10 February 2011 (2011-02-10), pages 1-12, XP060007307, DOI: 10.1117/12.876094 [retrieved on 2011-02-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• Michael Wahl: "Time-Correlated Single Photon Counting", PicoQuant GmbH Technical Note, 1 January 2009 (2009-01-01), pages 1-11, XP055135298, Retrieved from the Internet: URL:https://koppa.jyu.fi/avoimet/kemia/kems431/course-material/background-material-for-fluorescence-lifetime/single-photon-counting [retrieved on 2014-08-19]

**Description**

**Technical Field**

The present invention relates to a prostate cancer diagnosis device using a fractal dimension ($D_F$) value of temporal processes in prostate cells detected by auto-fluorescence and a method thereof, and more particularly, the present invention relates to a prostate cancer in-vitro diagnosis device and a method thereof.

**Background Art**

In general, a conventional medical device for diagnosing prostate cancer is a light source supply device using a gas laser, and particularly, a nitrogen ($N_2$) gas laser. The nitrogen gas laser is operated with a range of 375nm ultraviolet rays and is pumped by electric discharge, and has a merit of being inexpensive.

However, the nitrogen gas laser has an unstable output due to irregular pulse amplitude, and accordingly measured data values are unstable so that sensitivity with respect to a diagnosis result is low. In addition, a conventional medical device for diagnosing prostate cancer is large in size because of using a gas laser and spectroscopy.

Further, since the medical device for diagnosing prostate cancer uses a biomarker, a relatively long period of time is required to acquire a diagnosis result, and it has a problem of being exposed to radical rays in a diagnosis using a radioactive isotope.

In addition, when diagnosing prostate cancer by a pathologist, there is a risk of false positives, and when this occurs, there is a significantly longer time between diagnoses and treatment.

US patent no. 5,467,767 discloses a method for determining if tissue is malignant as opposed to non-malignant using time-resolved fluorescence spectroscopy, specifically time-correlated single photon counting.

European patent application no. EP 2 251 675 A1 and Gerich et al., Proc. of SPIE Vol. 7897, 78970R-1 to 78970R-12, disclose methods of detecting cancer-cells in prostate tissue with time-resolved fluorescence spectroscopy, based on a fractal dimension parameter derived from the non-exponential decay behaviour of the fluorescence intensity.

**Disclosure of Invention**

**Technical Problem**

The present invention has been made in an effort to provide a prostate cancer diagonsis device using a fractal dimension ($D_F$) value of temporal processes in prostate cells detected by auto-fluorescence that promptly provides an accurate and objective diagnosis result on a prostate cancer, and a method thereof.

Further, the present invention provides a prostate cancer diagnosis device using a $D_F$ - value of temporal processes in prostate cells that can diagnose a prostate cancer not by using a biomarker but by using a semiconductor laser, and a method thereof.

**Solution to Problem**

The present invention provides a prostate cancer diagnosis device as defined in claim 1. An exemplary embodiment of the present invention provides a prostate cancer diagnosis device using a $D_F$-value of temporal processes in prostate cells: The prostate cancer diagnosis device includes: a semiconductor laser emitting a laser beam with a wavelength of 375 nm; an optical unit transmitting the laser beam to a prostate sample and receiving auto-fluorescence generated from the sample of prostate;tissue, a detection unit detecting the auto-fluorescence received by the optical unit and measuring the single photon signal corresponding to a single pulse to obtain intensity of the time-dependent auto-fluorescence (hereinafter referred to as an auto-fluorescence measured value); and a diagnosis unit calculating $D_F$-values of temporal processes in prostate cells by the measured time dependent auto-fluorescence decay behaviour using an algorithm which yield a fractal dimension value.

The diagnosis unit further includes a function to determine a Gleason score for a biopsy core derived by all determined valued of the fractal dimension for the biopsy sample, usually 14 $D_F$-values are available.

The present invention also provides a prostate cancer diagnosis method as defined in claim 9. Another exemplary embodiment of the present invention provides a prostate cancer diagnosis method using $D_F$-value of temporal processes in prostate cells: The prostate cancer diagnosis method includes: transmitting a laser beam with a wavelength of 375 nm to a prostate sample and receiving auto-fluorescence generated from the sample of prostate tissue; detecting the auto-fluorescence received by an optical unit and measuring single photon signal corresponding to a single pulse to obtain intensity of the time-dependent auto-fluorescence (hereinafter referred to as an auto-fluorescence measured value); and calculating the $D_F$-value of temporal processes in prostate cells by the measured time dependent auto-fluorescence decay behaviour using a algorithm which yield a fractal dimension value.

The prostate cancer diagnosis method according to the exemplary embodiment of the present invention may further include determining a Gleason score corresponding to the calculated fractal dimension value.

When the auto-fluorescence measured value is I(t), the fractal dimension algorithm includes: selecting a maximum I(t) that is higher than a predetermined reference intensity $I_{ref}$ as a target; approximation modeling the selected I(t) to a linear value using a modeling function F(t); calculating a correlation function that indicates a difference obtained by subtracting a measured value of an attenuation period of I(t) from the maximum value $F_{max}$ of F(t); modeling this correlation function with a fractal model and then discussing the correlation function in a double log-log coordinate system; there calculating a parameter related to the fractal dimension corresponding to the slope (hereinafter referred to as a first slope) of the correlation function in the log-log coordinate system, the first slope being determined by a start time and a variable time length; while first the variable time length is fixed calculating a first fractal dimension value by changing the start time and determining the start time corresponding to the minimal value of the calculated first fractal dimension value; and while using this start time, calculating a second fractal dimension value by changing the variable time length and determining the minimal value of the second derivative of the calculated second fractal dimension value with respect to the variable time length.

The diode laser beam may have a 375nm wavelength or may be formed of two 750nm wavelengths having at least one time interval of picoseconds to femtoseconds.

## Advantageous Effects of Invention

According to the exemplary embodiment of the present invention, time for diagnosing a prostate cancer can be minimized so that time for diagnosis to treatmenent can be remarkably shortened.

In addition, according to the exemplary embodiment of the present invention, an objective diagnosis result on tissue biopsy using a semiconductor laser method that is unharmful to a human body can be provided.

Further, according to the exemplary embodiment of the present invention, a patient does not have rejection on the prostate cancer diagnosis because it can be performed by minimal invasively and painlessly, the prostate cancer diagnosis is convenient to pathologists, and tension and irritation in an operating room can be solved.

## Brief Description of Drawings

FIG. 1 is a block diagram of a prostate cancer diagnosis device and a method of diagnosis according to an exemplary embodiment of the present invention.

FIG. 2 is a block diagram of an optical configuration of the prostate cancer diagnosis device according to the exemplary embodiment of the present invention.

FIG. 3 is a detailed diagram of the optical configuration of the prostate cancer diagnosis device according to the exemplary embodiment of the present invention.

FIG. 4 is a flowchart of a prostate cancer diagnosis method using a $D_F$-value according to the exemplary embodiment of the present invention.

FIG. 5 is a flowchart of a process for calculating the $D_F$-value according to the exemplary embodiment of the present invention.

FIG. 6 is a graph showing a measured value and a modeling value according to the exemplary embodiment of the present invention.

FIG. 7 is a graph showing a correlation between measured values in an attenuation period with reference to to $F_{max}$ according to the exemplary embodiment of the present invention.

FIG. 8 is a graph of the correlation replaced into a log dimension according to the exemplary embodiment of the present invention.

FIG. 9 is a graph for determining a start time through fractal dimension values while a variable time is fixed according to the exemplary embodiment of the present invention.

FIG. 10 is a graph for determining fractal dimension values through fractal dimension values and differentiation values while the start time is fixed according to the exemplary embodiment of the present invention.

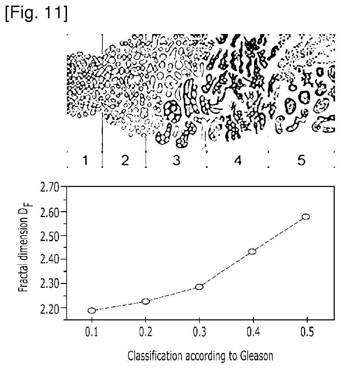

FIG. 11 is a graph of a correlation between the fractal dimension values and Gleason scores according to the exemplary embodiment of the present invention.

## Mode for the Invention

In the following detailed description, only certain exemplary embodiments of the present invention have been shown and described, simply by way of illustration. As those skilled in the art would realize, the described embodiments may be modified in various different ways, all without departing from the scope of the present invention as defined in the appended claims. Accordingly, the drawings and description are to be regarded as illustrative in nature and not restrictive. Like reference numerals designate like elements throughout the specification.

Hereinafter, a prostate cancer diagnosis device using a fractal dimension value and a method thereof according to an exemplary embodiment of the present invention will be described in detail.

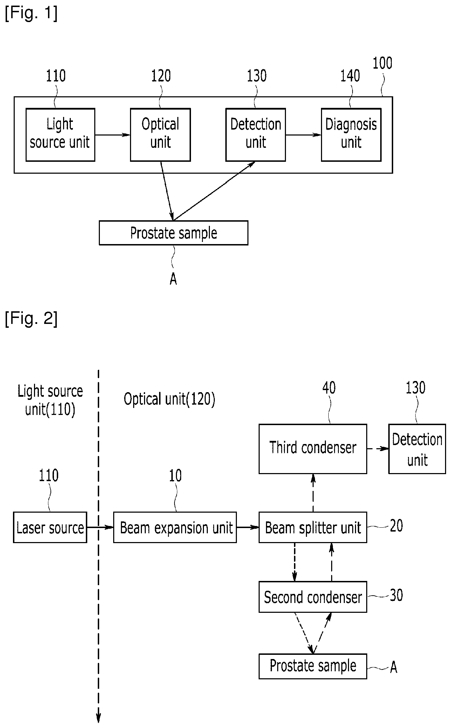

FIG. 1 is a block diagram of a prostate cancer diagnosis device and a method of a diagnosis device according to the exemplary embodiment of the present invention. As shown in FIG. 1, the prostate cancer diagnosis device using the fractal dimension value according to the exemplary embodiment of the present invention is a prostate cancer in-vitro diagnosis unit 100.

The prostate cancer in-vitro diagnosis device 100 according to the exemplary embodiment of the present invention includes a light source unit 110, an optical unit 120, a detection unit 130, and a diagnosis unit 140.

The light source unit 110 generates a diode laser beam and emits the same. The diode laser beam emitted from the light source unit 110 may have a wavelength of 375nm or 750nm.

Here, the light source unit 110 uses one wavelength when emitting the diode laser beam is having a 375nm laser beam, and uses two wavelengths when emitting the diode laser beam having a 750nm laser beam. That is, when the light source unit 110 uses a diode laser beam having a 375nm wavelength, the light source unit 110 emits the laser beam once, and when the light source unit 110 uses a diode laser beam having a 750nm wavelength, the light source unit 110 emits the laser beam two times.

Since the diode laser beam having a 750nm wavelength has a longer wavelength than the laser beam having a 375nm wavelength, the diode laser beam having 750nm has a merit of measuring the inside of a sample A compared to the diode laser beam having 375nm wavelength measuring the surface of the sample A. However, the laser beam of a 750nm wavelength has a lower wavelength energy compared to the diode laser beam of a 375nm wavelength.

Since the energy of a 750nm wavelength is lower than that of a 375nm wavelength, no or completely different fluorescence light is emitted from the sample A so that inaccurate measurement occurs.

In order to solve such a drawback, the light source unit 110 irradiates the laser beam of 750nm to the prostate sample A, and the laser beam is irradiated with a time interval of picoseconds to femtoseconds. That is, the light source unit 110 continuously irradiates two laser beams of 750nm (i.e., a pair of laser beams) with a time interval of picoseconds to femtoseconds.

Alternatively, the light source unit 110 may continuously irradiate the laser beams with a time interval of longer than femtoseconds.

When the pair of laser beams of 750nm are continuously irradiated with a time interval of picoseconds or femtoseconds, energy of each of the laser beams of a 750nm wavelength overlap each other such that the irradiation has an effect of irradiating the laser beam of a 375nm wavelength time interval.

The optical unit 120 condenses the laser beam emitted from the light source unit 110 to the prostate sample A, and receives auto-fluorescence generated from the prostate sample A and condenses the received light to the detection unit 130.

Here, protein of the prostate sample A includes a unique fluorescent material, called nicotinamide adenine dinucleotide (NADH), and NADH has an auto-fluorescence characteristic when a laser beam is irradiated thereto. NADH is a reduced form of nicotinamide adenine dinucleotide (NAD).

NAD is widely used in the corresponding process in cell respiration and a tricarboxylic acid cycle (TCA), and a reduction potential stored in NADH is converted to adenosine 5-triphophate (ATP) while passing through an electron transport system or used for anabolism. In prostate cells NADH is normally bound to cell-proteins, the structure of which is fractal and different for healthy and cancerous cells. Exciting the electrons in NADH by the 375 nm-laser beam, the excitation interacts with the vibrational and configurational states of the bound proteins. In such a way the differences in the prostate cell protein structure and dynamical behaviour may become visible in the time dependence of the fluorescence of NADH fluorophores.

The detection unit 130 detects photons of the auto-fluorescence using a photon multiplier tube (PMT) or a high-speed photo detector, and detects the amount of aouto-fluorescence emission (i.e., intensity) by the technique of time correlated single photon counting (TCSPC). A measured intensity of the sample A detected from the detection unit 130 will now be referred to as I(t).

The diagnosis unit 140 calculates a fractal dimension value $D_F$ from the intensity measured by the detection unit 130 using a fractal algorithm. A Gleason score for the biopsy core will be calculated taking into account all determined fractal dimension values $D_F$ for this core. That is, the $D_F$-values have corresponding Gleason grades (first grade to fifth grade), and the Gleason score is calculated from the sum of two Gleason grades. In this case, the diagnosis unit 140 stores a matching table of correlations between fractal dimension values and Gleason grades to determine a Gleason grade corresponding to a fractal dimension value.

In general, the Gleason grade is a technical term indicating a grade of tumor, and the grade indicates a differentiation degree of cancer cells. The Gleason grade is divided into the first grade to the fifth grade, and the fifth grade has highest possibility of cancer.

Typically, a pathologist uses the Gleason score as an indicator to determine prostrate cancer probability.

When a Gleason score is determined, the diagnosis unit 140 determines a diagnosis result corresponding to the Gleason score and outputs the diagnosis result. Then, a user can determine the diagnosis result.

Here, reliability of the correlation between the fractal dimension values $D_F$ and the Gleason score has been proven through many experiments by many pathologists. A characteristic experiment is performed using the prostate sample as a target.

The diagnosis unit 140 can also display a fractal dimension value $D_F$ without using a matching table (i.e., without using a Gleason score) or can provide a diagnosis result indicating a grade of prostate cancer corresponding to a $D_F$-value. In this case, the diagnosis result indicating the grade of prostate cancer is stored corresponding to a fractal dimension value (or, a fractal dimension value range).

Hereinafter, an optical configuration of the prostate cancer in-vitro diagnosis unit 100 according to the exemplary embodiment of the present invention will be described with reference to FIG. 2. FIG. 2 is a block diagram of an optical configuration of the prostate cancer diagnosis device according to the exemplary embodiment of the present invention.

As shown in FIG. 2, the optical configuration according to the exemplary embodiment of the present invention includes a light source unit 110 and an optical unit 120.

The light source unit 110 is formed of a semiconductor laser source, and may irradiate a laser beam of a 375nm wavelength or may irradiate two laser beams of a 750nm wavelength with a time interval of picoseconds or femtoseconds.

The optical unit 120 includes a beam expansion unit 10 expanding the laser beam and making the expended laser beam travel straight, a beam splitter 40 divaricating a path of the beam in a direction of the sample A and transmitting auto-fluorescence received from the sample A to a third condenser 40, a second condenser 30, and a third condenser 40. The second and third condensers 30 and 40 condense incident light.

Here, the second condenser 30 is disposed at the front side of the prostate sample A, and the third condenser 40 is disposed at the front of the detection unit 130.

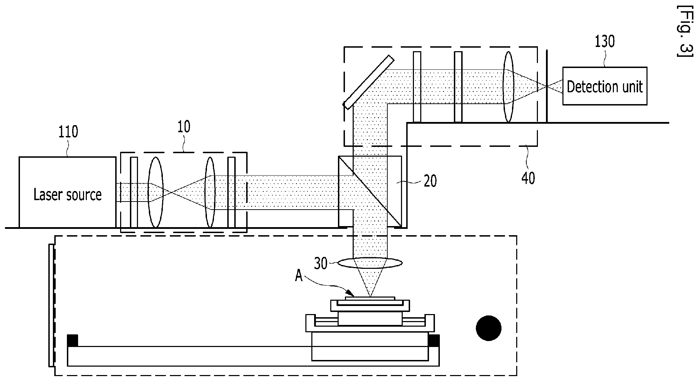

FIG. 3 is a detailed diagram of the optical configuration of the prostate cancer diagnosis device according to the exemplary embodiment of the present invention. As shown in FIG. 3, the beam expansion unit 10 of the optical unit 120 is sequentially formed of a radiation cleaning filter, a condensing lens, a beam expander, a lens transmitting light with constant intensity, and a halfwave plate. The beam expansion unit 10 cleans the laser beam of the semiconductor laser source 110, expands the cleansed beam to a constant size, and then causes the expanded beam to enter into the beam splitter unit 20.

Here, the beam expander functions to increase the size of the incident light. The half-wave plate rotates a polarization direction of light 180 degrees, and it functions to increase reflectivity by changing the beam from a p-wave to an s-wave in a light transmission system. That is, the halfwave plate increases light efficiency.

The beam splitter unit 20 is formed of a beam splitter cube, and changes a path of light incident from the beam expansion unit 10 to the prostate sample A. In further detail, the beam splitter cube transmits light incident from the beam expansion unit 10 to the prostate sample A, and transmits the auto-fluorescence incident from the sample A to the third condenser 40.

The second condenser 30 is disposed in an upper side of the sample A, and is formed of at least one cylindrical lens. The at least one cylindrical lens forming the second condenser 30 changes the shape of the beam in only one direction. That is, the cylindrical lens is used to adjust the shape of the beam irradiated to the sample A.

The third condenser 40 includes a reflection mirror, a notch filter, a polfilter, a confocal lens, and a field stop. The reflection mirror transmits the light incident from the beam splitter cube 20 to the notch filter, the notch filter corrects an impedance increase of a resonance frequency in the auto fluorescence, and the confocal lens brings the focus on the detection unit 130, that is, the confocal lens determines the size of the beam when a focal point is placed in the detection unit 130.

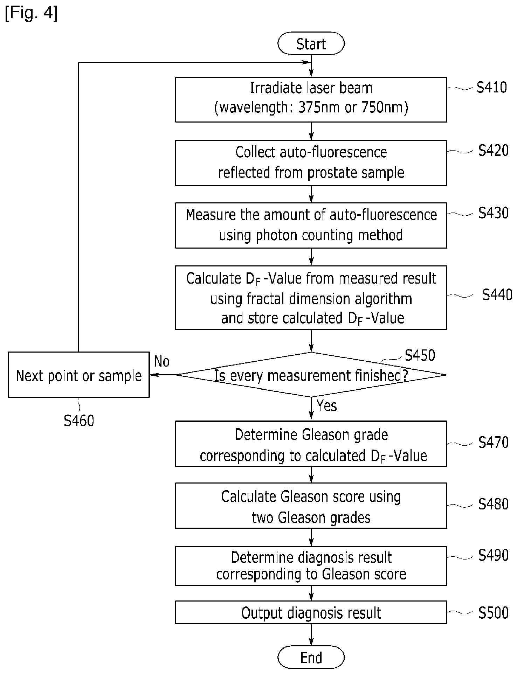

Hereafter, a prostate cancer diagnosis method using a $D_F$-value according to the exemplary embodiment of the present invention will be described with reference to FIG. 4. FIG. 4 is a flowchart of a prostate cancer diagnosis method using a $D_F$-value according to the exemplary embodiment of the present invention.

Initially, a plurality of prostate samples A are placed at a measurement location on a measurement shelf, and then a $D_F$-value of a plurality of measurement points for each of the plurality of prostate samples A are determined. For example, in the prostate cancer diagnosis method using the $D_F$-value according to the exemplary embodiment of the present invention, a biopsy is performed in 12 directions with respect to a prostate tissue extracted from a human body to acquire a prostate sample for measurement and a $D_F$-value for each of 12 prostate samples A is determined with a regular interval of 14 points. The number of prostate samples A to be measured may be more or less than 12, and the number of measurement points may be more or less than 14.

As shown in FIG. 4, a diode laser having a wavelength of 375nm or 750nm is irradiated from the semiconductor laser source 110 (S410).

The irradiated diode laser beam is condensed to the prostate sample A by the optical unit 120, and accordingly auto-fluorescence is emitted from the prostate sample A by the diode laser beam and the auto-fluorescence is collected in the detection unit 130 through the optical unit 120 (S420).

In this case, the detection unit 130 detects the auto-fluorescence using a high-speed photodetector or a photon multiplier tube (PMT), and measures intensity (the amount of emission) of a single photon corresponding to a single pulse using a TCSPC method.

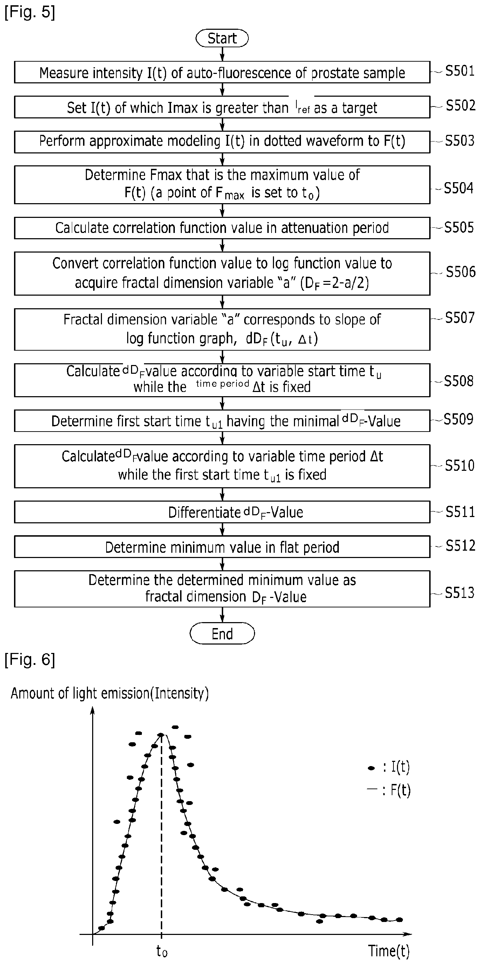

The intensity of the single photon is represented as a dot-shaped graph in the time axis as shown in FIG. 6, and the graph will be referred to as I(t) (S430). I(t) is a measured value of a time-dependent photon.

The diagnosis unit 140 calculates a fractal dimension value $D_F$ from the dot-shaped auto-fluorescence intensity graph I(t) using a fractal dimension algorithm and stores the calculated fractal dimension value $D_F$ (S440).

The diagnosis unit 140 determines whether a currently measured sample and a measurement point are the last measurement to determined termination of all measurements (S450).

If the measurement is not the last measurement, the diagnosis unit 140 controls a sample on the shelf for measurement or a measurement point to be the next target to be measured (S460), and then controls the steps S410 to S450 to be repeated. However, if the measurement is the last measurement, the diagnosis unit 140 determines a Gleason grade corresponding to a fractal dimension value of each prostate sample A and the measurement point using the matching table (S470).

In addition, the diagnosis unit 140 sums two Gleason grades according to conditions predetermined by an operator among the determined Gleason grades so as to calculate a Gleason score (S480).

In this case, the conditions are a Gleason score of a prostate sample A expected to be the highest Gleason grade (e.g., a voluntary Gleason score or the highest or lowest Gleason score) and a Gleason score of a prostate sample A expected to be the highest Gleason grade (e.g., a voluntary Gleason score or the highest or lowest Gleason score), but the conditions can be modified by the operator.

The diagnosis unit 140 determines a diagnosis result corresponding to the corresponding Gleason score using the calculated Gleason scores (S490), and outputs the determined diagnosis result on a screen or on paper for the operator (S500).

Hereinafter, operation of the diagnosis unit 140 that determines a fractal dimension value using the auto-fluorescence I(t) received from the sample A according to the exemplary embodiment of the present invention will be described with reference to FIG. 5.

FIG. 5 is a flowchart of a calculation process of the fractal dimension value according to the exemplary embodiment of the present invention. As shown in FIG. 5, a method for calculating the fractal dimension value $D_F$ using a fractal dimension algorithm is as follows.

The diode laser beam of the semiconductor laser source 11 is irradiated to each measurement point of a core of the prostate sample A and the intensity I(t) of the auto-fluorescence generated from the prostate sample A is measured using a single photon counting method (S501).

Through such a measurement, the measured values intensity I(t) of the auto-fluorescence are represented as a dot-shaped curved line as shown in FIG. 6.

The diagnosis unit 140 selectively inputs the maximum intensity $I_{max}$ of higher than 100cps among the measured intensity I(t). Here, since a step S502 is performed, a process for selecting only the maximum intensity $I_{max}$ of higher than 100cps among the measured intensity I(t) can be omitted.

In addition, the diagnosis unit 140 compares the maximum intensity $I_{max}$ with a re-predetermined reference intensity $I_{ref}$, and sets a measured intensity I(t) of which the maximum intensity $I_{max}$ is higher than the reference intensity $I_{ref}$ as a target for testing (S502).

The diagnosis unit 140 performs approximation modeling with respect to measured value I(t) having a dotted waveform, set as a target for testing to represent the measured value in a curved line of Equation 1 (S503) (refer to FIG. 6).

Here, the step S503 uses the approximation modeling that is performed to acquire consistent results by eliminating an invalid measured value.

A function F(t) for initial intensity modeling is as given in Equation 1.

(Equation 1)

$$F(t) = \frac{A \, \exp\left\{ -\left( \left[ \frac{(t - t_0)}{t_{ca}} \right]^2 \right)^{\frac{a}{2}} \right\}}{\left( 1 + \exp\left[ \frac{-(t - t_0)}{t_{cb}} \right]^2 \right)^{\frac{b}{2}}}$$

The diagnosis unit 140 determines $F_{max}$ by repeating evaluation a predetermined number of times (e.g., three times) with respect to a waveform of the function F(t), and determines a time location $t_0$ of $F_{max}$ (S504).

Once $F_{max}$ and the time location $t_0$ of $F_{max}$ are determined, a correlation between the respective measured values (dot values) is determined based on $F_{max}$ using Equation 2.

(Equation 2)

$$C(t) = F_{max} - I(t) \qquad \text{, with } t > t_o$$

Here, C(t) denotes a correlation function. In this case, the equation is performed in a time period where $t > t_0$ to determine a correlation in an attenuation falling curved line of F(t) (i.e., attenuation falling curved line of I(t)) (S505).

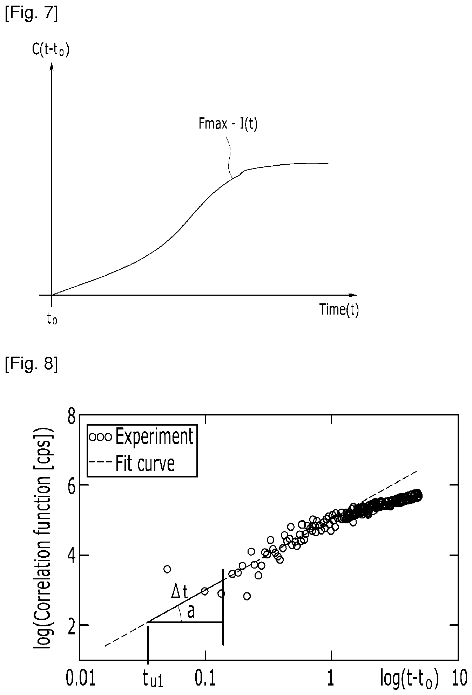

Since such a correlation function C(t) is based on a time location $t_0$ of $F_{max}$, the time location $t_0$ of $F_{max}$ is moved to the original location when being shifted to the left by $t_0$, and accordingly, $C(t-t_0)$ becomes as shown in FIG. 7.

FIG. 7 is a graph of correlations between measured values of one attenuation period with reference to $F_{max}$ according to the exemplary embodiment of the present invention. As shown in FIG. 7, the value of the correlation $C(t-t_0)$ is gradually increased in proportional to a distance from the time location $t_0$ and then converged to a constant value from a given time point.

Such a curved shape of the correlation function $C(t-t_0)$ (i.e., the shape of correlation) is influenced by a variable a of the function F(t) in Equation 1, and the variable a is a variable of the fractal dimension value $D_F$.

Thus, modeling of Equation 2 in association with the fractal dimension value $D_F$ can be given in Equation 3. A modeled fractal dimension value $D_F$ in Equation 3 is $D_F = 2 - a/2$.

(Equation 3)

$$C(t-t_0) = C1 + C2(t - t_0)^a$$

Here, the fractal dimension value is calculated to be $D_F = 2 - a/2$, and accordingly the variable a in Equation 3 should be calculated.

For this, the diagnosis unit 140 replaces the correlation function of Equation 3 with a log function as shown in Equation 4 (S506). In a first step the constant C1 was chosen C1 = 0

(Equation 4)

$$\log(C(t-t_o)) = C_o + a \log(t-t_o) \text{ , with } D_F = 2 - a/2.$$

Here, $C_o$ is a constant.

As the correlation function is replaced with the log function as shown in Equation 4, the graph illustrating the value of correlation function $C(t-t_0)$ is changed to a log dimension as shown in FIG. 8.

FIG. 8 is a graph illustrating conversion of the correlation to the log dimension according to the exemplary embodiment of the present invention. In the graph of FIG. 8, the vertical axis denotes a log value of the correlation function $C(t-t_0)$ and the horizontal axis denotes a log value of $(t-t_0)$.

Thus, a slope of the graph shown in FIG. 8 corresponds to the variable a according to FIG. 4. In this case, the slope (i.e., the variable a) is determined by a start location $t_u$ and a variable time period $\Delta t$ at the start location (S507).

That is, the fractal function $dD_F$ is a function of the start location $t_u$ and the variable time period $\Delta t$, and therefore the fractal function $dD_F$ can be represented as $dD_F(t_u, \Delta t)$.

Therefore, the diagnosis unit 140 performs calculation of a fractal dimension value using the fractal function $dD_F(t_u, \Delta t)$.

In further detail, the diagnosis unit 140 first changes $t_u$ while fixing $\Delta t$ to a predetermined value and calculates $dD_F(t_u, \Delta t)$ according to the variable $t_u$ so as to acquire value of the fractal function corresponding to an arbitrarily variable $t_u$ and $\Delta t$ (S508).

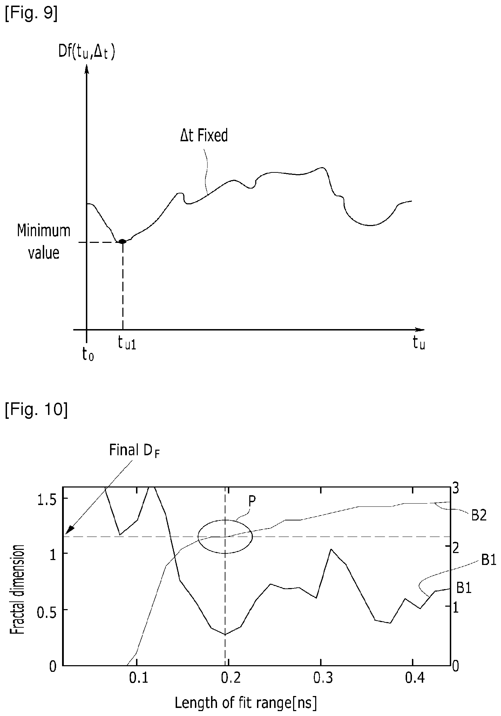

The $dD_F(t_u, \Delta t)$ calculated through the step S508 is represented as a non-linear curved line as shown in FIG. 9. FIG. 9 is a graph for determining a start time through $D_F$ - values while a variable time period is fixed according to the exemplary embodiment of the present invention.

As shown in FIG. 9, the values of $dD_F(t_u, \Delta t)$ are non-linearly and irregularly changed when changing $t_u$ while $\Delta t$ is fixed.

In such a non-linear curved line, the diagnosis unit 140 determines a time $t_{u1}$ of a minimal value point of $dD_F(t_u, \Delta t)$ (S509).

Next, the diagnosis unit 140 calculates values of $dD_F(t_u, \Delta t)$ by changing the variable time period $\Delta t$ while fixing $t_u$ to $t_{u1}$ with respect to $dD_F(t_u, \Delta t)$ (S510), and the calculated $dD_F(t_{u1}, \Delta t)$ is represented as the non-linear curved line B1 in FIG. 10.

The diagnosis unit 140 determines a minimal value of the values of $dD_F(t_{u1}, \Delta t)$, represented as B1 in FIG. 10 as a $D_F$-value with respect to the measured value I(t).

In this case, the diagnosis unit 140 makes curved line B in FIG. 10 by differentiating $dD_F(t_{u1}, \Delta t)$ so as to acquire an accurate minimal value in the non-linear curved line B1 of FIG. 10 (S511).

FIG. 10 is a graph for determining $D_F$-values through $D_F$-values and differentiation values while the start time is fixed according to the exemplary embodiment of the present invention.

In FIG. 10, the vertical axis denotes $D_F$-values and the horizontal axis denotes the variable time period $\Delta t$. In FIG. 10, the minimum value of the curved line B1 indicates a flat period in the curved line B2 by differentiation $dD_F(t_{u1}, \Delta t)/d\Delta t$.

Thus, the diagnosis unit 140 finds a fractal dimension value having the minimum $(dD_F(t_{u1}, \Delta t)/d\Delta t)$ in the flat period of the curved line B2 (S512), and determines the minimum value as a $D_F$-value of the sample A (S513).

In a second step the parameter C1 in Equation 3 was chosen by the condition, that the averaged value of $D_F$ averaging over a certain region of the parameter $t_u$ and $\Delta t$. Then the procedure is will be repeated as described above.

As shown in FIG. 4, the diagnosis unit 140 calculates the fractal dimension value $D_F$ of the sample A and determines a Gleason grade corresponding to the fractal dimension values $D_F$ so that the diagositic device 140 can calculate a Gleason score and provide a diagnosis result on prediction of prostate cancer corresponding to the Gleason score.

The above-mentioned exemplary embodiments of the present invention are not embodied only by a method and apparatus. Alternatively, the above-mentioned exemplary embodiments may be embodied by a program performing functions that correspond to the configuration of the exemplary embodiments of the present invention, or a recording medium on which the program is recorded.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

<Description of Symbols>

100: in-vitro diagnosis device 110: light source unit
120: optical unit 130: detection unit
140: diagnosis unit

**Claims**

1.  A prostate cancer diagnosis device (100) for determining a fractal dimension value $D_F$, comprising:

    a semiconductor laser (110) emitting a laser beam;

an optical unit (120) for transmitting the laser beam to a plurality of measurement points of a prostate sample (A) and receiving auto-fluorescence generated from the prostate sample (A);

a detection unit (130) for detecting the auto-fluorescence received by the optical unit (120) and measuring an intensity I(t) of the time-dependent auto-fluorescence by a Time Correlated Single Photon method; and

a diagnosis unit (140) adapted for calculating a fractal dimension value $D_F$ of the detected auto-fluorescence using a fractal dimension algorithm,

the device being **characterised by** the fractal dimension algorithm comprising the following sequence of steps:

selecting a measured intensity I(t) having a maximum intensity $I_{max}$ that is higher than a predetermined reference intensity $I_{ref}$ as a target for testing;

approximation modeling the selected I(t) using a modeling function F(t);

calculating a correlation function C(t) that indicates a difference obtained by subtracting a measured value of an attenuation falling curved line of I(t) from a maximum value $F_{max}$ of F(t);

modeling the correlation function C(t) with a fractal model by applying a log function to the correlation function C(t);

calculating a fractal function $dD_F(t_u, \Delta t)$ corresponding to a first slope a of a curve represented by values of the log function, the first slope being determined by a start time $t_u$ and a variable time period $\Delta t$;

while the variable time period $\Delta t$ is fixed with respect to the fractal function $dD_F(t_u, \Delta t)$, changing the start time $t_u$ and determining a first start time $t_{u1}$ corresponding to the minimal value of the calculated fractal function $dD_F(t_u, \Delta t)$; and

while the start time $t_u$ is fixed to the first start time $t_{u1}$ with respect to the fractal function, changing the variable time period $\Delta t$ and determining the minimal value of the calculated fractal function $dD_F(t_{u1}, \Delta t)$ as the fractal dimension value $D_F$;

wherein the modeling function F(t) is given by:

$$F(t) = \frac{A \cdot \exp\left\{-\left(\left[\frac{(t-t_0)}{t_{ca}}\right]^2\right)^{\frac{a}{2}}\right\}}{\left(1 + \exp\left[\frac{-(t-t_0)}{t_{cb}}\right]^2\right)^{\frac{b}{2}}} \qquad \text{(Equation 1)}$$

wherein the diagnosis unit (140) determines $F_{max}$ by repeating evaluation a predetermined number of times with respect to a waveform of the function F(t), and determines a time location to of $F_{max}$, once $F_{max}$ and the time location $t_0$ of $F_{max}$ are determined, and

wherein the correlation function C(t) between the respective measured values is determined based on $F_{max}$ using:

$$C(t) = F_{max} - I(t), \text{ with } t > t_0. \qquad \text{(Equation 2)}$$

.

2. The prostate cancer diagnosis device (100) of claim 1, wherein for calculating the first slope a, the correlation function C(t) is modeled according to:

$$C(t-t_0) = C1 + C2(t - t_0)^a,$$

wherein the fractal dimension value is calculated to be $D_F = 2 - a/2$.

3. The prostate cancer diagnosis device (100) of claim 2, wherein for calculating the first slope a, the diagnosis unit (140) applies a log function to the correlation function $C(t-t_0)$ as given by:

$$\log(C(t-t_0)) = Co + a\,\log(t-t_0),$$

wherein Co is a constant.

4. The prostate cancer diagnosis device (100) of claim 1, wherein the fractal dimension algorithm further comprises differentiating the fractal function $dD_F(t_{u1}, \Delta t)$ with respect to $\Delta t$, and determining the minimal value in a flat period of the differentiated fractal function $dD_F(t_{u1}, \Delta t)$ as the fractal dimension value $D_F$.

5. The prostate cancer diagnosis device (100) of claim 2, wherein the diagnosis unit further includes a function for determining a Gleason grade corresponding to the calculated fractal dimension values and calculating a Gleason score using the determined Gleason grade.

6. The prostate cancer diagnosis device (100) of claim 2, wherein the semiconductor laser (110) emits a laser beam of a 375nm wavelength.

7. The prostate cancer diagnosis device (100) of claim 3, wherein the semiconductor laser (110) emits two laser beams of a 750nm wavelength within a time interval of picoseconds to femtoseconds, and energies of each of the laser beams overlap each other.

8. The prostate cancer diagnosis device (100) of claim 1, wherein the auto-fluorescence is fluorescence emitted from a unique fluorescence material, i.e., NADH, generated from cancer cells.

9. A prostate cancer diagnosis device (100) for determining a fractal dimension value $D_F$, comprising:

transmitting a diode laser beam to a plurality of measurement points of a prostate sample (A) and receiving auto-fluorescence generated from the prostate sample (A);
detecting the auto-fluorescence received by an optical unit (120) and measuring intensity $I(t)$ of the time-dependent auto-fluorescence by a Time Correlated Single Photon method; and
calculating the fractal dimension value $D_F$ of the detected auto-fluorescence using a fractal dimension algorithm, the method being **characterized by** the fractal dimension algorithm comprising the following sequence of steps:

selecting a measured intensity $I(t)$ having a maximum intensity $I_{max}$ that is higher than a predetermined reference intensity $I_{ref}$ as a target for testing;
approximation modeling the selected $I(t)$ using a modeling function $F(t)$;
calculating a correlation function $C(t)$ that indicates a difference obtained by subtracting a measured value of an attenuation falling curved line of $I(t)$ from a maximum value $F_{max}$ of $F(t)$;
the correlation function $C(t)$ with a fractal model by applying a log function to the correlation function $C(t)$;
calculating a fractal function $dD_F(t_u, \Delta t)$ corresponding to a first slope a of a curve represented by values of the log function, the first slope being determined by a start time $t_u$ and a variable time period $\Delta t$;
while the variable time period $\Delta t$ is fixed with respect to the fractal function $dD_F(t_u, \Delta t)$, changing the start time $t_u$ and determining a first start time $t_{u1}$ corresponding to the minimal value of the calculated fractal function $dD_F(t_u, \Delta t)$; and

$$F(t) = \frac{A \cdot \exp\left\{ -\left( \left[ \frac{(t-t_0)}{t_{ca}} \right]^2 \right)^{\frac{a}{2}} \right\}}{\left( 1 + \exp\left[ \frac{-(t-t_0)}{t_{cb}} \right]^2 \right)^{\frac{b}{2}}} \qquad \text{(Equation 1)}$$

wherein $F_{max}$ is determined by repeating evaluation a predetermined number of times with respect to a waveform of the function F(t), and a time location $t_0$ of $F_{max}$ is determined once $F_{max}$ is determined, and wherein the correlation function C(t) between the respective measured values is determined based on $F_{max}$ using: $C(t) = F_{max} - I(t)$, with $t > t_0$.

10. The method of claim 9, wherein for calculating the first slope a, the correlation function C(t) is modeled according to:

$$C(t-t_0) = \overline{C1} + C2(t - t_0)a,$$

wherein the fractal dimension value is calculated to be DF $=2 - a/2$, or for this, a log function is applied to the correlation function $C(t-t_0)$ as given by:

$$\log(C(t-t_0))$$
$$= Co + a \log(t-t_0) ,$$

wherein Co is a constant.

11. The prostate cancer diagnosis method of claim 9, wherein the wavelength of the laser beam is 375nm.

12. The prostate cancer diagnosis method of claim 9, wherein the laser beam is formed of two wavelengths of 750nm, each having a time interval of picoseconds to femtoseconds, and energies of each of the laser beams overlap each other.

13. The prostate cancer diagnosis method of claim 9, further comprising a step for determining a Gleason grade corresponding to the calculated fractal dimension value and calculating a Gleason score using the determined Gleason grade.

14. The prostate cancer diagnosis method of claim 9, wherein the auto-fluorescence is fluorescence emitted from a unique fluorescence material, i.e., NADH, generated from cancer cells.


**Patentansprüche**

1. Eine Prostatakrebs - Diagnosevorrichtung (100) für die Bestimmung eines fraktalen Dimensionswerts $D_F$, die aufweist:

einen Halbleiter - Laser (110), der einen Laserstrahl emittiert;
eine optische Einheit (120) für die Übertragung des Laserstrahls zu einer Mehrzahl von Messpunkten einer Prostata - Probe (A) und für den Empfang von Auto-Fluoreszenz, die von der Prostata - Probe (A) generiert ist;
eine Erfassungseinheit (130) für das Detektieren der Auto-Fluoreszenz, die von der optischen Einheit (120) empfangen ist, und für die Messung einer Intensität I(t) der zeitabhängigen Auto-Fluoreszenz durch eine zeit - korrelierte - Einzelphoton - Methode; und
eine Diagnoseeinheit (140), die dazu ausgelegt ist, einen fraktalen Dimensionswert $D_F$ der detektierten Auto-Fluoreszenz unter Verwendung eines Algorithmus für fraktale Dimension zu berechnen,
wobei die Vorrichtung durch den Algorithmus für fraktale Dimension charakterisiert ist, der die folgende Sequenz von Schritten umfasst:

Wählen einer gemessenen Intensität I(t), die eine maximale Intensität $I_{max}$, die höher ist als eine vorbestimmte Referenz - Intensität $I_{ref}$, aufweist, als ein Ziel für das Testen;
Approximierungs - Modellieren des ausgewählten I(t) unter Verwendung einer modellierenden Funktion F(t);
Berechnen einer Korrelationsfunktion C(t), die eine Differenz anzeigt, die dadurch erhalten ist, dass ein gemessener Wert einer abfallenden gekrümmten Linie der Dämpfung von I(t) von einem maximalen Wert $F_{max}$ von F(t) subtrahiert wird;
wobei die Korrelationsfunktion C(t) mit einem fraktalen Modell arbeitet, in dem eine algorithmische Funktion auf die Korrelationsfunktion C(t) angewendet wird;

Berechnen einer fraktalen Funktion $dD_F(t_u, \Delta t)$, die einer ersten Neigung a einer Kurve entspricht, die durch Werte der log - Funktion repräsentiert ist, wobei die erste Neigung durch eine Start-Zeit $t_u$ und eine variable Zeitperiode $\Delta t$ bestimmt ist;

wobei die variable Zeitperiode $\Delta t$ mit Bezug zu der fraktalen Funktion $dD_F(t_u, \Delta t)$ festgelegt ist, wobei die Start-Zeit $t_u$ geändert wird und eine erste Start-Zeit $t_{u1}$ bestimmt wird, die dem minimalen Wert der berechneten fraktalen Funktion $dD_F(t_u, \Delta t)$ entspricht; und

während die Start-Zeit $t_u$ auf die erste Start-Zeit $t_{u1}$ mit Bezug zu der fraktalen Funktion fixiert ist, Ändern der variablen Zeitperiode $\Delta t$ und Bestimmen des minimalen Werts der berechneten fraktalen Funktion $dD_F(t_{u1}, \Delta t)$ als den fraktalen Dimensionswert $D_F$;

wobei die modellierende Funktion F(t) gegeben ist durch:

$$F(t) = \frac{A \cdot \exp\left\{-\left(\left[\frac{(t-t_0)}{t_{ca}}\right]^2\right)^{\frac{a}{2}}\right\}}{\left(1 + \exp\left[\frac{-(t-t_0)}{t_{cb}}\right]^2\right)^{\frac{b}{2}}} \qquad \text{(Gleichung 1)}$$

wobei die Diagnoseeinheit (140) $F_{max}$ bestimmt, indem eine Bewertung für eine vorbestimmte Anzahl von Malen mit Bezug zu der Wellenform der Funktion F(t) wiederholt wird, und eine zeitliche Stelle to von $F_{max}$ bestimmt, sobald $F_{max}$ und die zeitliche Position to von $F_{max}$ bestimmt sind, und

wobei die Korrelation zu C(t) zwischen den jeweiligen gemessenen Werten auf der Basis von $F_{max}$ unter Verwendung von:

$$C(t) = F_{max} - I(t), \text{ mit } t > t_0 \qquad \text{(Gleichung 2)}$$

bestimmt wird.

2. Die Prostatakrebs - Diagnosevorrichtung (100) gemäß Anspruch 1, bei der für die Berechnung der ersten Neigung a die Korrelationsfunktion C(t) gemäß Folgendem modelliert ist:

$$C(t-t_0) = C1 + C2(t-t_0)^a,$$

wobei der fraktale Dimensionswert so berechnet wird, dass er $D_F = 2 - a/2$ ist.

3. Die Prostatakrebs - Diagnosevorrichtung (100) gemäß Anspruch 2, bei der die Diagnoseeinheit (140) für die Berechnung der ersten Neigung a eine logarithmische Funktion auf die Korrelationsfunktion $C(t-t_0)$ anwendet, wie sie wie folgt gegeben ist:

$$\log(C(t-t_0)) = C_0 + a \log(t-t_0),$$

wobei Co eine Konstante ist.

4. Die Prostatakrebs - Diagnosevorrichtung (100) gemäß Anspruch 1, bei der der fraktale Dimensionsalgorithmus weiterhin ein Differenzieren der fraktalen Funktion $dD_F(t_{u1}, \Delta t)$ im Hinblick auf $\Delta t$, und das Bestimmen des minimalen Werts in einer flachen Periode der differenzierten fraktalen Funktion $dD_F(t_{u1}, \Delta t)$ als den fraktalen Dimensionswert $D_F$ umfasst.

5. Die Prostatakrebs - Diagnosevorrichtung (100) gemäß Anspruch 2, bei der die Diagnoseeinheit ferner eine Funktion für die Bestimmung eines Gleason-Grads entsprechend den berechneten fraktalen Dimensionswerten und ein Berechnen eines Gleason-Werts unter Verwendung des bestimmten Gleason-Grads enthält.

6. Die Prostatakrebs - Diagnosevorrichtung (100) nach Anspruch 2, bei der der Halbleiterlaser (110) einen Laserstrahl mit einer Wellenlänge von 375 nm aussendet.

7. Die Prostatakrebs -Diagnosevorrichtung (100) nach Anspruch 3, bei der der Halbleiterlaser (110) zwei Laserstrahlen mit einer Wellenlänge von 750 nm innerhalb eines Zeitintervalls von Picosekunden bis Femtosekunden aussendet und sich Energien von jedem der Laserstrahlen gegenseitig überlappen.

8. Die Prostatakrebs - Diagnosevorrichtung (100) nach Anspruch 1, bei der die Auto-Fluoreszenz eine Fluoreszenz ist, die von einem einzigartigen Fluoreszenzmaterial, d. h. NADH, emittiert wird, das aus Krebszellen erzeugt ist.

9. Eine Prostatakrebs - Diagnosevorrichtung (100) für die Bestimmung eines fraktalen Dimensionswerts $D_F$, die aufweist:

Aussenden eines Dioden - Laserstrahls zu einer Mehrzahl von Messpunkten einer Prostata - Probe A und Empfangen von Auto-Fluoreszenz, die von der Prostata - Probe A generiert ist;
Detektieren der Auto-Fluoreszenz, die durch eine optische Einheit (120) empfangen ist, und Messen einer Intensität I(t) der zeitabhängigen Auto-Fluoreszenz durch ein zeitkorreliertes Einzelphoton - Verfahren; und
Berechnen des fraktalen Dimensionswerts $D_F$ der detektierten Auto-Fluoreszenz unter Benutzung eines fraktalen Dimensions - Algorithmus,
wobei die Methode durch den fraktalen Dimensions -Algorithmus charakterisiert ist, der die folgende Sequenz von Schritten aufweist:

Auswählen einer gemessenen Intensität I(t), die eine maximale Intensität $I_{max}$ hat, die höher ist, als eine vorbestimmte Referenzintensiät $I_{ref}$, als ein Ziel für das Testen;
Approximations - Modellieren des ausgewählten I(t) unter Benutzung einer modellierenden Funktion F(t);
Berechnen einer Korrelationsfunktion C(t), die eine Differenz angibt, die dadurch erhalten ist, dass ein gemessener Wert einer abfallenden gekrümmten Dämpfungslinie von I(t) von einem maximalen Wert $F_{max}$ von F(t) subtrahiert wurde;
die Korrelationsfunktion C(t) mit einem fraktalen Modell durch Anwenden einer logarithmischen Funktion auf die Korrelationsfunktion C(t);
Berechnen einer fraktalen Funktion $dD_F(t_u, \Delta t)$ entsprechend einer ersten Neigung a einer Kurve, die durch Werte der logarithmischen Funktion repräsentiert ist, wobei die erste Neigung durch eine Startzeit $t_u$ und eine variable Zeitperiode $\Delta t$ bestimmt ist;
Ändern der Startzeit $t_u$, während die variable Zeitperiode $\Delta t$ mit Bezug zu der fraktalen Funktion $dD_F(t_u, \Delta t)$ fixiert ist, und Bestimmen einer ersten Startzeit $t_{u1}$ entsprechend zu dem minimalen Wert der berechneten fraktalen Funktion $dD_F(t_u, \Delta t)$; und, während die Startzeit $t_u$ auf die erste Startzeit $t_{u1}$ mit Bezug zu der fraktalen Funktion fixiert ist, Ändern der variablen Zeitperiode $\Delta t$ und Ändern des minimalen Werts der berechneten fraktalen Funktion $dD_F(t_{u1}, \Delta t)$ als den fraktalen Dimensionswert $D_F$;
wobei die modellierende Funktion F(t) gegeben ist durch

$$F(t) = \frac{A \cdot \exp\left\{-\left(\left[\frac{(t-t_0)}{t_{ca}}\right]^2\right)^{\frac{a}{2}}\right\}}{\left(1 + \exp\left[\frac{-(t-t_0)}{t_{cb}}\right]^2\right)^{\frac{b}{2}}}$$

wobei $F_{max}$ durch Wiederholen einer Bewertung für eine vorbestimmte Anzahl von Malen mit Bezug zu einer Wellenform der Funktion F(t) bestimmt ist, und eine zeitliche Lokalisierung to von $F_{max}$ wird, sobald

$F_{max}$ bestimmt ist, und

wobei die Korrelationsfunktion A(t) zwischen den jeweiligen gemessenen Werten auf der Basis von $F_{max}$ unter Verwendung von C(t) = $F_{max}$ - I(t) bestimmt wird, wobei t > to ist.

**10.** Die Methode nach Anspruch 9,

wobei

für die Berechnung der ersten Neigung a die Korrelationsfunktion C(t) in Entsprechung mit:

$$C(t\text{-}t_0 = C1 + C2(t - t_0)a$$

modelliert wird,

wobei der fraktale Dimensionswert so berechnet wird, dass er gleich

$$DF = 2 - a/2$$

ist, oder

hierfür eine logarithmische Funktion auf die Korrelationsfunktion (Ct-$t_0$) angewendet wird, die wie folgt gegeben ist:

$$\log (C(t\text{-}t_0)) = Co + a \log(t\text{-}t_0),$$

wobei Co eine Konstante ist.

**11.** Die Prostatakrebs - Diagnosemethode nach Anspruch 9, bei der die Wellenlänge des Laserstrahls gleich 375 nm ist.

**12.** Die Prostatakrebs - Diagnosemethode nach Anspruch 9, bei der der Laserstrahl durch zwei Wellenlängen von 750 nm geformt ist, die jeweils ein Zeitintervall von Picosekunden bis Femtosekunden haben, und Energien von jedem der Laserstrahlen sich gegenseitig überlappen.

**13.** Die Prostatakrebs - Diagnosemethode nach Anspruch 9, die weiterhin einen Schritt der Bestimmung eines Gleason-Grads aufweist, der dem berechneten fraktalen Dimensionswert entspricht, und Berechnen eines Gleason-Scorewerts unter Verwendung des bestimmten Gleason-Grads.

**14.** Die Prostatakrebs - Diagnosemethode nach Anspruch 9, bei der die Auto-Fluoreszenz eine Fluoreszenz ist, die von einem einzigartigen Fluoreszenzmaterial, d. h. NADH, emittiert wird, das aus Krebszellen generiert ist.

**Revendications**

**1.** Dispositif de diagnostic du cancer de la prostate (100) pour la détermination d'une valeur de dimension fractale $D_F$, comprenant :

un laser à semi-conducteur (110) émettant un faisceau laser ;

une unité optique (120) pour transmettre le faisceau laser à une pluralité de points de mesure d'un échantillon de prostate (A) et recevoir une autofluorescence générée par l'échantillon de prostate (A) ;

une unité de détection (130) pour détecter l'autofluorescence reçue par l'unité optique (120) et mesurer une intensité I(t) de l'autofluorescence dépendant du temps par une méthode de photon unique corrélé en temps ; et

une unité de diagnostic (140) conçue pour calculer une valeur de dimension fractale $D_F$ de l'autofluorescence détectée à l'aide d'un algorithme de dimension fractale,

le dispositif étant **caractérisé en ce que** l'algorithme de dimension fractale comprend la séquence d'étapes suivante :

la sélection d'une intensité mesurée I(t) ayant une intensité maximale $I_{max}$ qui est supérieure à une intensité de référence prédéterminée $I_{ref}$ comme cible pour le test ;

la modélisation par approximation de l'I(t) sélectionnée à l'aide d'une fonction de modélisation F(t) ;

le calcul d'une fonction de corrélation C(t) qui indique une différence obtenue par soustraction d'une valeur mesurée d'une courbe de réduction d'atténuation d'I(t) d'une valeur maximale $F_{max}$ de F(t) ;

la fonction de corrélation C(t) avec un modèle fractal par application d'une fonction log à la fonction de corrélation C(t) ;

le calcul d'une fonction fractale $dD_F$ $(t_u, \Delta t)$ correspondant à une première pente a d'une courbe représentée par des valeurs de la fonction log, la première pente étant déterminée par un temps de départ $t_u$ et une période de temps variable $\Delta t$ ;

alors que la période de temps variable $\Delta t$ est fixe par rapport à la fonction fractale $dD_F$ $(t_u, \Delta t)$, la modification du temps de départ $t_u$ et la détermination d'un premier temps de départ $t_{u1}$ correspondant à la valeur minimale de la fonction fractale calculée $dD_F$ $(t_u, \Delta t)$ ; et

alors que le temps de départ $t_u$ est fixé au premier temps de départ $t_{u1}$ par rapport à la fonction fractale, la modification de la période de temps variable $\Delta t$ et la détermination de la valeur minimale de la fonction fractale calculée $dD_F$ $(t_{u1}, \Delta t)$ comme la valeur de dimension fractale $D_F$ ;

dans lequel la fonction de modélisation F(t) est donnée par :

$$F(t) = \frac{A \cdot \exp\left\{-\left(\left[\frac{(t-t_0)}{t_{ca}}\right]^2\right)^{\frac{a}{2}}\right\}}{\left(1 + \exp\left[\frac{-(t-t_0)}{t_{cb}}\right]^2\right)^{\frac{b}{2}}} \qquad \text{(Équation 1)}$$

dans lequel l'unité de diagnostic (140) détermine $F_{max}$ en répétant l'évaluation un nombre de fois prédéterminé par rapport à une forme d'onde de la fonction F(t), et détermine un emplacement de temps to de $F_{max}$, une fois que $F_{max}$ et l'emplacement de temps to de $F_{max}$ sont déterminés, et dans lequel la fonction de corrélation C(t) entre les valeurs mesurées respectives est déterminée sur la base de $F_{max}$ à l'aide de :

$$C(t) = F_{max} - I(t), \text{ avec } t > t_0 \qquad \text{(Équation 2)}$$

2. Dispositif de diagnostic du cancer de la prostate (100) selon la revendication 1, dans lequel pour calculer la première pente a, la fonction de corrélation C(t) est modélisée selon :

$$C(t-t_0) = C1 + C2(t-t_0)^a,$$

dans lequel la valeur de dimension fractale est calculée pour être $D_F = 2 - a/2$.

3. Dispositif de diagnostic du cancer de la prostate (100) selon la revendication 2, dans lequel pour calculer la première pente a, l'unité de diagnostic (140) applique une fonction log à la fonction de corrélation $C(t-t_0)$ telle que donnée par :

$$\log(C(t-t_0)) = Co + a \log(t-t_0),$$

dans laquelle Co est une constante.

4. Dispositif de diagnostic du cancer de la prostate (100) selon la revendication 1, dans lequel l'algorithme de dimension fractale comprend en outre la différenciation de la fonction fractale $dD_F$ $(t_{u1}, \Delta t)$ par rapport à $\Delta t$, et la détermination de la valeur minimale dans une période plate de la fonction fractale différenciée $dD_F$ $(t_{u1}, \Delta t)$ comme la valeur de dimension fractale $D_F$.

**5.** Dispositif de diagnostic du cancer de la prostate (100) selon la revendication 2, dans lequel l'unité de diagnostic comprend en outre une fonction pour déterminer un grade de Gleason correspondant aux valeurs de dimension fractale calculées et pour calculer un score de Gleason à l'aide du grade de Gleason déterminé.

**6.** Dispositif de diagnostic du cancer de la prostate (100) selon la revendication 2, dans lequel le laser à semi-conducteur (110) émet un faisceau laser d'une longueur d'onde de 375 nm.

**7.** Dispositif de diagnostic du cancer de la prostate (100) selon la revendication 3, dans lequel le laser à semi-conducteur (110) émet deux faisceaux lasers d'une longueur d'onde de 750 nm dans un intervalle de temps allant de picosecondes à des femtosecondes, et les énergies de chacun des faisceaux lasers se chevauchent.

**8.** Dispositif de diagnostic du cancer de la prostate (100) selon la revendication 1, dans lequel l'autofluorescence est une fluorescence émise par un matériau à fluorescence unique, en d'autres termes le NADH, généré par les cellules cancéreuses.

**9.** Dispositif de diagnostic du cancer de la prostate (100) pour la détermination d'une valeur de dimension fractale $D_F$, comprenant :

la transmission d'un faisceau de diode laser à une pluralité de points de mesure d'un échantillon de prostate (A) et la réception d'une autofluorescence générée par l'échantillon de prostate (A) ;
la détection de l'autofluorescence reçue par une unité optique (120) et la mesure d'une intensité I(t) de l'autofluorescence dépendant du temps par une méthode de photon unique corrélé en temps ; et
le calcul d'une valeur de dimension fractale $D_F$ de l'autofluorescence détectée à l'aide d'un algorithme de dimension fractale,
le procédé étant **caractérisé en ce que** l'algorithme de dimension fractale comprend la séquence d'étapes suivante :

la sélection d'une intensité mesurée I(t) ayant une intensité maximale $I_{max}$ qui est supérieure à une intensité de référence prédéterminée $I_{ref}$ comme cible pour le test ;
la modélisation par approximation de l'I(t) sélectionnée à l'aide d'une fonction de modélisation F(t) ;
le calcul d'une fonction de corrélation C(t) qui indique une différence obtenue par soustraction d'une valeur mesurée d'une courbe de réduction d'atténuation d'I(t) d'une valeur maximale $F_{max}$ de F(t) ;
la fonction de corrélation C(t) avec un modèle fractal par application d'une fonction log à la fonction de corrélation C(t) ;
le calcul d'une fonction fractale $dD_F(t_u, \Delta t)$ correspondant à une première pente a d'une courbe représentée par des valeurs de la fonction log, la première pente étant déterminée par un temps de départ $t_u$ et une période de temps variable $\Delta t$ ;
alors que la période de temps variable $\Delta t$ est fixe par rapport à la fonction fractale $dD_F(t_u, \Delta t)$, la modification du temps de départ $t_u$ et la détermination d'un premier temps de départ $t_{u1}$ correspondant à la valeur minimale de la fonction de dimension fractale calculée $dD_F(t_u, \Delta t)$ ; et
alors que le temps de départ $t_u$ est fixé au premier temps de départ $t_{u1}$ par rapport à la fonction fractale, la modification de la période de temps variable $\Delta t$ et la détermination de la valeur minimale de la fonction fractale calculée $dD_F(t_{u1}, \Delta t)$ comme la valeur de dimension fractale $D_F$ ;
dans lequel la fonction de modélisation F(t) est donnée par :

$$F(t) = \frac{A \cdot \exp\left\{-\left(\left[\frac{(t-t_0)}{t_{ca}}\right]^2\right)^{\frac{a}{2}}\right\}}{\left(1 + \exp\left[\frac{-(t-t_0)}{t_{cb}}\right]^2\right)^{\frac{b}{2}}}$$

dans lequel $F_{max}$ est déterminée en répétant l'évaluation un nombre de fois prédéterminé par rapport à une forme d'onde de la fonction F(t), et un emplacement de temps $t_0$ de $F_{max}$ est déterminé une fois que $F_{max}$ est déterminée, et

dans lequel la fonction de corrélation C(t) entre les valeurs mesurées respectives est déterminée sur la base de $F_{max}$ à l'aide de :

$$C(t) = F_{max} - I(t), \text{ avec } t>t_0.$$

10. Procédé selon la revendication 9, dans lequel pour calculer la première pente a, la fonction de corrélation C(t) est modélisée selon :

$$C(t-t_0) = C1 + C2(t - t_0)a$$

dans lequel la valeur de dimension fractale est calculée pour être DF = 2 - a/2,
ou
pour cela, une fonction log est appliquée à la fonction de corrélation C(t-$t_0$) telle que donnée par :

$$\log(C(t-t_0)) = Co + a \log(t-t_0),$$

dans laquelle Co est une constante.

11. Procédé de diagnostic du cancer de la prostate selon la revendication 9, dans lequel la longueur d'onde du faisceau laser est de 375 nm.

12. Procédé de diagnostic du cancer de la prostate selon la revendication 9, dans lequel le faisceau laser est formé de deux longueurs d'onde de 750 nm, ayant chacune un intervalle de temps allant de picosecondes à des femtosecondes, et les énergies de chacun des faisceaux lasers se chevauchent.

13. Procédé de diagnostic du cancer de la prostate selon la revendication 9, comprenant en outre une étape de détermination d'un grade de Gleason correspondant à la valeur de dimension fractale calculée et de calcul d'un score de Gleason à l'aide du grade de Gleason déterminé.

14. Procédé de diagnostic du cancer de la prostate selon la revendication 9, dans lequel l'autofluorescence est une fluorescence émise par un matériau à fluorescence unique, en d'autres termes le NADH, généré par les cellules cancéreuses.

[Fig. 1]

[Fig. 2]

[Fig. 3]

[Fig. 4]

```
                    ( Start )
                        │
                        ▼
        ┌───────────────────────────────┐
        │    Irradiate laser beam        │ ── S410
        │ (wavelength: 375nm or 750nm)   │
        └───────────────────────────────┘
                        │
                        ▼
        ┌───────────────────────────────┐
        │   Collect auto-fluorescence    │ ── S420
        │  reflected from prostate sample│
        └───────────────────────────────┘
                        │
                        ▼
        ┌───────────────────────────────┐
        │ Measure the amount of auto-    │ ── S430
        │ fluorescence using photon      │
        │ counting method                │
        └───────────────────────────────┘
                        │
                        ▼
        ┌───────────────────────────────┐
        │ Calculate $D_F$-Value from      │
        │ measured result using fractal  │ ── S440
        │ dimension algorithm and store  │
        │ calculated $D_F$-Value          │
        └───────────────────────────────┘
                        │
                        ▼
┌──────────────────┐ No ╱─────────────────────────╲  S450
│ Next point or    │◄───   Is every measurement    ╲
│ sample           │    ╲        finished?        ╱
└──────────────────┘     ╲─────────────────────╱
      │                          │ Yes
     S460                        ▼
                    ┌───────────────────────────────┐
                    │   Determine Gleason grade      │ ── S470
                    │ corresponding to calculated    │
                    │ $D_F$-Value                     │
                    └───────────────────────────────┘
                                │
                                ▼
                    ┌───────────────────────────────┐
                    │   Calculate Gleason score using│ ── S480
                    │       two Gleason grades       │
                    └───────────────────────────────┘
                                │
                                ▼
                    ┌───────────────────────────────┐
                    │    Determine diagnosis result  │ ── S490
                    │  corresponding to Gleason score│
                    └───────────────────────────────┘
                                │
                                ▼
                    ┌───────────────────────────────┐
                    │     Output diagnosis result    │ ── S500
                    └───────────────────────────────┘
                                │
                                ▼
                            (  End  )
```

[Fig. 5]

( Start )

Measure intensity I(t) of auto-fluorescence of prostate sample — S501

Set I(t) of which Imax is greater than $I_{ref}$ as a target — S502

Perform approximate modeling I(t) in dotted waveform to F(t) — S503

Determine Fmax that is the maximum value of
F(t) (a point of $F_{max}$ is set to $t_0$) — S504

Calculate correlation function value in attenuation period — S505

Convert correlation function value to log function value to
acquire fractal dimension variable "a" ($D_F = 2 - a/2$) — S506

Fractal dimension variable "a" corresponds to slope of
log function graph, $dD_F(t_u, \Delta t)$ — S507

Calculate $dD_F$value according to variable start time $t_u$
while the time period $\Delta t$ is fixed — S508

Determine first start time $t_{u1}$ having the minimal $dD_F$-Value — S509

Calculate $dD_F$value according to variable time period $\Delta t$
while the first start time $t_{u1}$ is fixed — S510

Differentiate $dD_F$-Value — S511

Determine minimum value in flat period — S512

Determine the determined minimum value as
fractal dimension $D_F$-Value — S513

( End )

[Fig. 6]

Amount of light emission(Intensity)

● : I(t)
— : F(t)

$t_0$

Time(t)

EP 2 699 904 B1

[Fig. 7]

[Fig. 8]

[Fig. 9]

[Fig. 10]

[Fig. 11]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5467767 A

- EP 2251675 A1

**Non-patent literature cited in the description**

- **GERICH et al.** *Proc. of SPIE,* vol. 7897